**Europäisches Patentamt**

(19) **European Patent Office**

**Office européen des brevets**

(11) Numéro de publication: **0 206 874**
**B1**

# (12) FASCICULE DE BREVET EUROPÉEN

(45) Date de publication du fascicule du brevet:
**10.08.88**

(51) Int. Cl.⁴: **B 60 K 15/02**

(21) Numéro de dépôt: **86401155.6**

(22) Date de dépôt: **30.05.86**

(54) **Réservoir à carburant en matière synthétique, notamment pour véhicule automobile.**

(30) Priorité: **14.06.85 FR 8509044**

(43) Date de publication de la demande:
**30.12.86 Bulletin 86/52**

(45) Mention de la délivrance du brevet:
**10.08.88 Bulletin 88/32**

(84) Etats contractants désignés:
**AT BE CH DE GB IT LI NL SE**

(56) Documents cité:
**DE-A-2 223 205**
**DE-A-2 353 448**
**FR-A-2 164 969**
**FR-A-2 490 162**

(73) Titulaire: **REGIE NATIONALE DES USINES RENAULT, Boîte postale 103 8-10 avenue Emile Zola, F-92109 Boulogne- Billancourt (FR)**

(72) Inventeur: **Galles, Henri, 4, Chemin Menuel, F-78126 Aulnay- sur- Mauldre (FR)**
Inventeur: **Elias, Bernard, 13, Villeparc, F-78310 Elancourt Maurepas (FR)**

(74) Mandataire: **Saint Martin, René, Régie Nationale des Usines Renault Direction des Recherches et Développements Service 0804 8-10, Avenue Emile- Zola, F-92109 Boulogne Billancourt Cedex (FR)**

EP 0 206 874 B1

## Description

La présente invention se rapporte à un réservoir à carburant en matière synthétique pour véhicule automobile et plus particulièrement à son système d'expansion et de mise à l'air libre.

Un des buts recherchés est de faciliter la mise en place automatique de l'ensemble ci-dessus, de la simplifier et de limiter son prix de revient.

Une autre préoccupation est de donner au réservoir et à ses servitudes toutes les garanties de fiabilité conformes aux normes de sécurité en vigueur.

Les réservoirs à carburant généralement utilisés comportent dans leur enceinte un volume d'expansion qui doit rester inoccupé par le liquide afin de compenser sa dilatation en cas d'échauffement.

Il découle de ce qui précède la présence de plusieurs tubes de dégazage issus de la partie supérieure du réservoir, qui doivent lui être assujéti dans certaines conditions bien déterminées en particulier sans former de siphon sur leur parcours ; ceci constitue une contrainte de montage, car elle implique le perçage de certains obstacles, tels que les traverses de la structure porteuse, pour le passage desdits tuyaux, afin de maintenir leur continuité ; le contournement par le bas desdits obstacles produirait la formation du siphon que l'on doit éviter.

La structure du réservoir selon l'invention pallie cet inconvénient ; il est venu de moulage en une seule pièce, avec ses différents conduits, et peut être monté d'un bloc par le dessous du véhicule, en une seule opération, sons perçage d'éléments de la caisse, ni passage consécutif des tuyaux au travers d'ouvertures ménagées au cours d'une opération supplémentaire.

Une autre faiblesse des systèmes antérieurs réside dans les moyens utilisés pour réserver le volume d'expansion pendant le remplissage du réservoir et sa mise à l'air libre après la fermeture du bouchon.

Ces fonctions sont réalisées par des clapets mécaniques pouvant manquer de fiabilité et dont le prix de revient, incluant le montage et le contrôle des différentes pièces les constituant, est relativement élevé.

La présente invention pallie également ces inconvénients par l'utilisation d'un clapet hydraulique de structure particulière.

Elle sera décrite à titre d'exemple non limitatif au regard des figures 1 à 6 ci-jointes qui représentent respectivement:

- la figure 1, une coupe longitudinale du réservoir selon l'invention, pourvu de ses différents organes annexes, en phase initiale de remplissage ;

- les figures 2 à 4, à des vues analogues, au cours des différentes phases de remplissage, incluant la dernière, réservoir plein ;

- la figure 5, à une vue analogue représentant l'état du réservoir plein, fermé, lorsque la température de son contenu s'élève ;

- la figure 6, à une vue analogue, après la consommation d'une quantité significative de carburant.

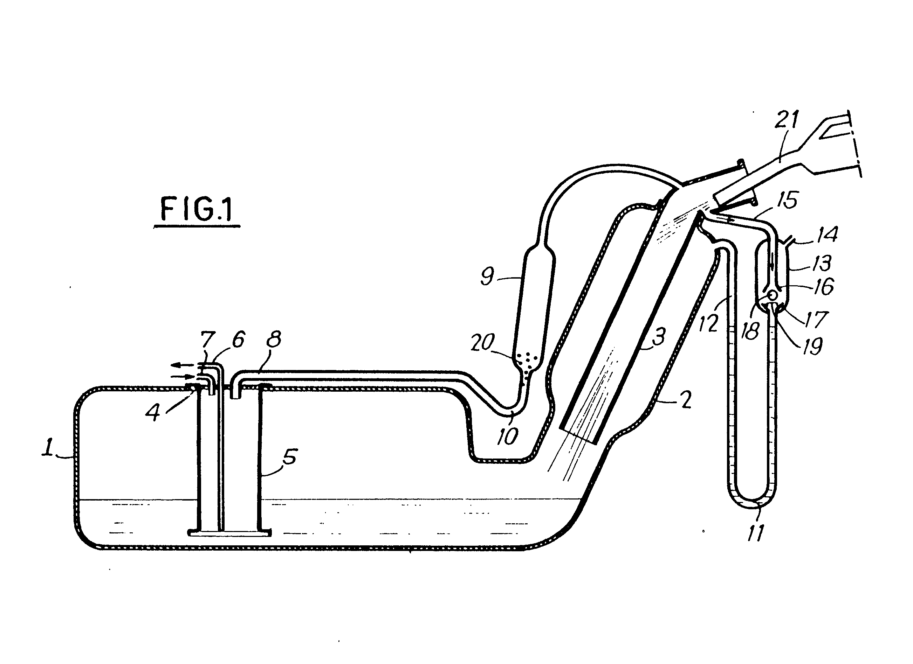

En référence à la figure 1, on voit que le réservoir selon l'invention est composé d'un volume principal 1, prolongé vers le haut par un vase d'expansion 2, dans lequel est logée la pipe de remplissage 3, recevant le pistolet 21. La partie supérieure du volume principal 1 est percée d'un passage 4 dans lequel est introduit un module 5 de forme cylindrique, pourvu de divers éléments tels que la jauge, les conduits d'alimentation 6, de retour 7 et de dégazage 8. Ce dernier se prolonge jusqu'à la partie supérieure de la pipe de remplissage 3, en formant un siphon 10 et une chambre d'expansion 9. Un second siphon 11 est disposé sur le conduit 12 qui part de la partie supérieure du vase d'expansion 2 et dont l'autre extrémité débouche à la base d'un boîtier 13 ; celui-ci comporte à sa partie supérieure une mise à l'air libre 14 pourvue d'un étranglement, et un passage pour un conduit 15 réunissant la partie supérieure de la pipe 3 à un évasement 16 situé au regard d'une pièce analogue 17 prolongeant le conduit 12 ; entre les deux est disposé un système de clapet constitué par un flotteur sphérique 18 et un support 19.

Le fonctionnement du dispositif selon l'invention est le suivant:

- La première phase de remplissage du réservoir est illustrée à la figure 1 ; le carburant issu du pistolet 21 traverse la pipe 3 et remplit le volume principal 1 ; simultanément, un flux de liquide emprunte le conduit 15, le boîtier 13 et aboutit dans le tuyau 12 dans lequel se forme un siphon 11. Le gaz du réservoir est à ce stade de remplissage en surpression, ce qui provoque une remontée du liquide stagnant dans le siphon 10 vers la chambre d'expansion 9, accompagnée de la formation de bulles 20 formées par l'échappement du gaz excédentaire.

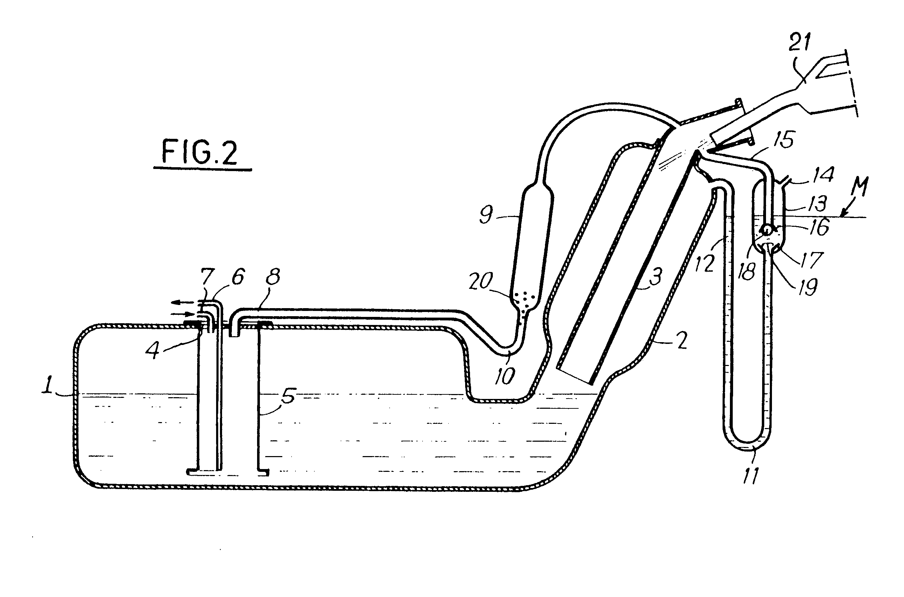

- Dans la deuxième phase de remplissage représentée à la figure 2, le niveau du carburant continue à monter, isolant le vase d'expansion 2 de l'enceinte principale 1, qui est dégazée par le conduit 8 et via la chambre 9. Simultanément, du liquide emprunte le conduit 15, remplit le boîtier 13 et le tube 12 jusqu'au niveau M, pour lequel le flotteur 18 obture l'évasement et interrompt l'apport en carburant.

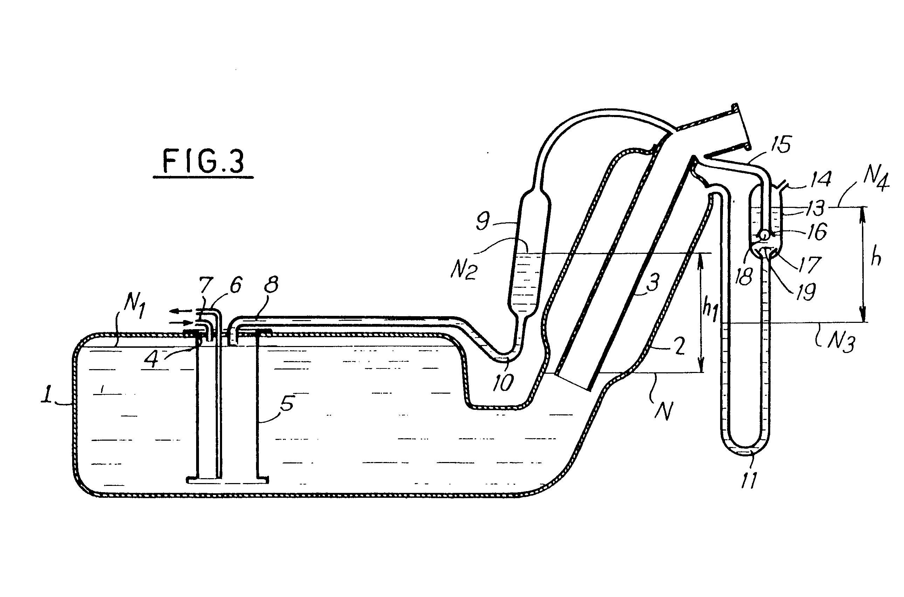

- Dans la troisième phase, illustrée à la figure 3, le carburant atteint son niveau $N_1$ maximum dans l'enceinte principale 1, noyant le tube de dégazage 8 et la chambre d'expansion 9 jusqu'au niveau $N_2$, identique à celui qui règne dans la pipe 3 ; une surpression est engendrée dans le vase d'expansion 2, proportionnelle à la hauteur de la colonne de carburant $h_1$, qui est équilibré par une variation des niveaux en $N_3$ et $N_4$ dans le clapet hydraulique constitué par le conduit 12, le siphon 11 et le boîtier 13.

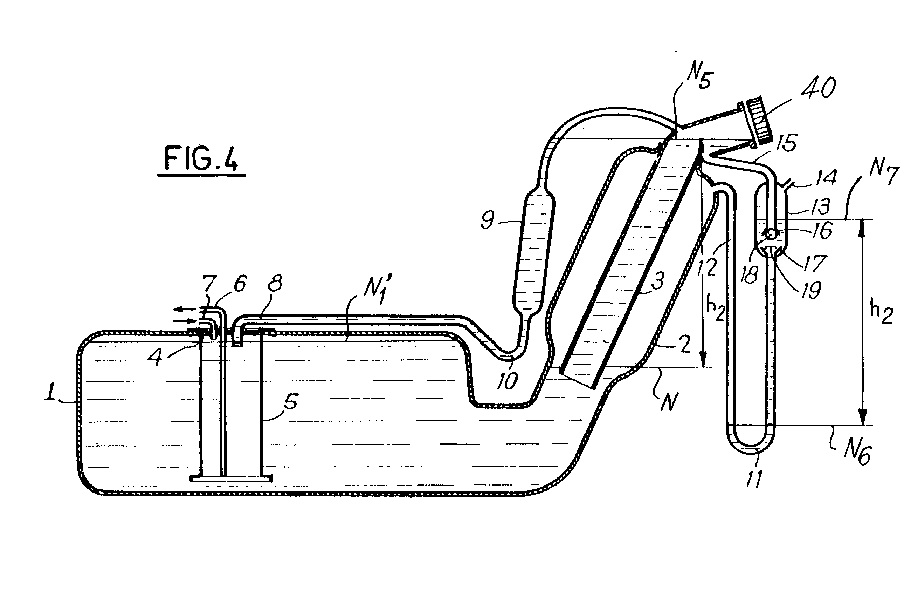

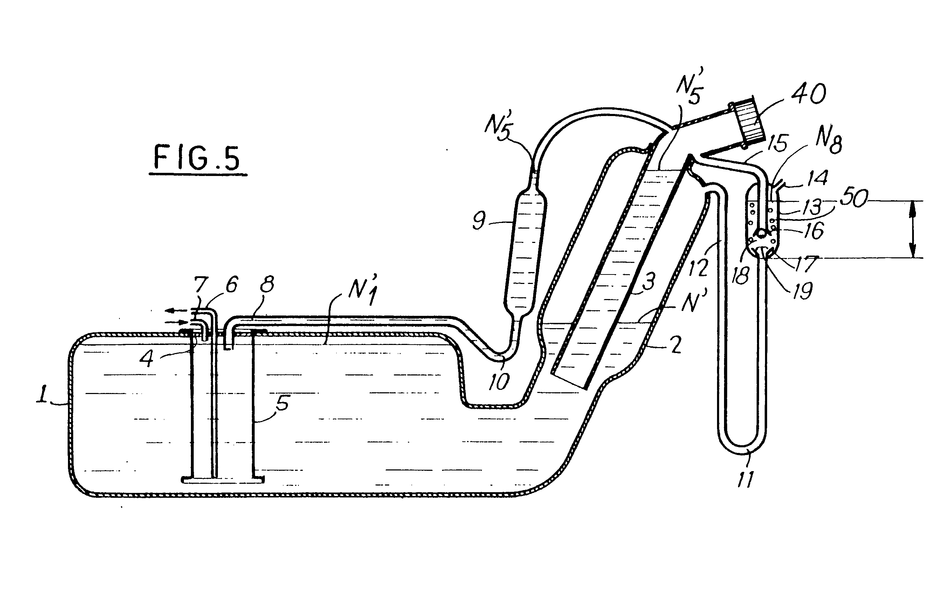

- La phase ultime de remplissage est visible à la figure 4 où le niveau de carburant se trouve en $N_5$, dans la pipe 3 comme dans le conduit de dégazage 8. Le niveau N reste stablé dans la

chambre d'expansion 2, où toutefois la pression s'élève, se rééquilibrant par une modification des niveaux dans le clapet hydraulique en $N_6$ et $N_7$, séparés par une colonne de carburant $h_2$. Le bouchon 40 du réservoir est alors fermé ; le véhicule stationnant au soleil, la température et la pression des gaz s'élèvent en $P_1$ dans le sommet de la pipe et en $P_2$ dans la partie supérieure de l'enceinte principale 1, entraînant alors un abaissement des niveaux en $N'_5$ (figure 5) et une élévation dans le vase d'expansion 2 du niveau N en N' ainsi que de la pression du gaz qu'il contient ; de ce fait le carburant contenu dans le siphon 11 est expulsé vers le boîtier 13 jusqu'à un niveau $N_8$ ; les gaz excédentaires traversent alors le liquide, sous forme de bulles 50, puis la mise à l'air libre 14, abaissant ainsi la pression gazeuse dans le vase d'expansion 2.

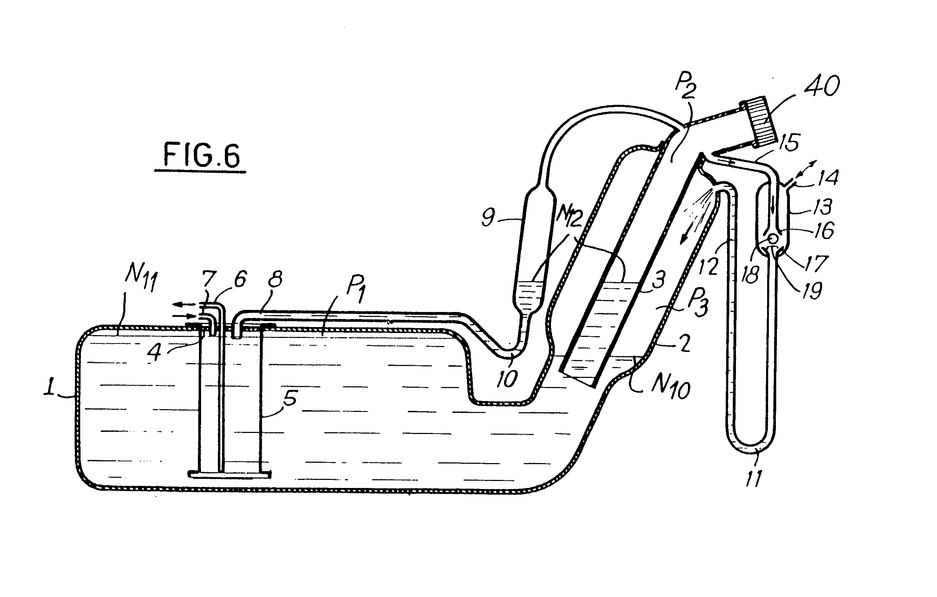

- Une situation opposée fait l'objet de la figure 6 ; une consommation de carburant par le conduit 6 entraîne une dépression dans la partie supérieure de l'enceinte principale 1 en $P_1$ en $P_2$ dans la pipe 3 et en $P_3$ dans le vase d'expansion 2 par suite de l'abaissement des niveaux en $N_{10}$, $N_{11}$ et $N_{12}$ ; il résulte de ce qui précède que le liquide contenu dans le boîtier 13, le siphon 11 et le conduit 12 se vidange, dans le vase 2, permettant la mise à l'air libre par 14 du réservoir, ce qui s'oppose à la création d'une dépression. Le clapet 17 - 18 revient en position ouverte.

## Revendications

1. Réservoir à carburant en matière synthétique pour véhicule automobile, comportant un système d'expansion et de mise à l'air libre, caractérisé par le fait qu'il est constitué par une enceinte principale (1) prolongée vers le haut par un vase d'expansion (2) dans lequel est logée la pipe de remplissage (3) à la partie supérieure de laquelle est piqué un conduit de dégazage (8), comportant une chambre d'expansion (9), puis formant un siphon (10), avant d'aboutir au sommet de l'enceinte principale, dans un module (5) pourvu également des conduits de retour (7) et d'alimentation (6), un conduit (15) réunissant par ailleurs la partie supérieure de la pipe (3) à celle du vase d'expansion (2) en formant un clapet hydraulique.

2. Réservoir selon la revendication 1, caractérisé en ce que le clapet hydraulique est constitué d'un siphon (11) disposé sur le trajet du conduit (12) réuni au vase (2) par l'une de ses extrémité, dont l'autre, évasée (en 17) fait face à l'extrémité évasée (16) du conduit (15) relié à la pipe (3), un flotteur sphérique (18) et son support (19) étant intercallé entre ces extrémités évasées (16 - 17), l'ensemble ci-dessus étant inclus dans un boîtier (13) comportant une mise à l'air libre (14) pourvue d'un étranglement.

## Claims

1. A fuel tank of synthetic material for a motor vehicle comprising an expansion and venting system, characterised in that it is formed by a main enclosure (1) extended upwardly by an expansion vessel (2) in which is disposed the filling pipe (3), to the upper part of which is connected a degassing conduit (8) comprising an expansion chamber (9) and then forming a siphon (10) before terminating at the top of the main enclosure in a module (5) also provided with return and feed conduits (7 and 6 respectively), a conduit (15) also connecting the upper pert of the pipe (3) to that of the expansion vessel (2), forming a hydraulic lock.

2. A tank according to claim 1 characterised in that the hydraulic lock is formed by a siphon (11) disposed on the line of the conduit (12) connected to the vessel (2) by one of its ends, the other of which, being flared (at 17), faces the flared end (16) of the conduit (15) connected to the pipe (3), a ball float (18) and its support (19) being interposed between said flared ends (16-17), the above-indicated assembly being contained in a casing (13) comprising a venting means (14) provided with a constriction.

## Patentansprüche

1. Kunststoffbrennstoffbehälter für Kraftfahrzeuge, mit einem mit der Umgebung in Verbindungen stehendem Ausdehnungssystem, dadurch gekennzeichnet, daß er aus einem Hauptbehälter (1) besteht, der nach oben durch ein Ausdehnungsgefäß (2) verlängert ist, in dem der Einfüllstutzen (3) angeordnet ist, an dessen oberem Teil eine Entgasungsleitung (8) angeschlossen ist, die eine Ausdehnungskammer (9) aufweist, danach einen Siphon (10) bildet, bevor sie am Oberteil des Hauptbehälters mündet in einem Bauteil (5), das ebenfalls mit einer Rückkehrleitung (7) und einer Versorgungsleitung (6) versehen ist, wobei eine Leitung (15) den oberen Abschnitt des Stutzens (3) mit derjenigen des Ausdehnungsgefäßes (2) unter Bildung eines hydraulischen Ventils verbindet.

2. Behälter nach Anspruch 1, dadurch gekennzeichnet, daß das hydraulische Ventil aus einem Siphon (11) besteht, der im Weg der Leitung (12) angeordnet ist, die mit einem Ende mit dem Gefäß (2) verbunden ist und deren anderes, aufgeweitetes Ende (17) dem aufgeweiteten Ende (16) der mit dem Stutzen (3) verbundenen Leitung (15) gegenüberliegt, wobei ein kugelförmiger Schwimmer (18) und seine Halterung (19) zwischen den aufgeweiteten Enden (16, 17) angeordnet ist und diese gesamte Anordnung in einem Gehäuse (13) eingeschlossen ist, das einen Luftauslaß (14) mit einer Engstelle aufweist.

FIG.1

FIG.2

FIG.3

FIG.4

0 206 874

FIG.5

0 206 874

FIG.6